# EUROPÄISCHE PATENTANMELDUNG

(11) **EP 1 787 797 A1**
(43) Veröffentlichungstag der Anmeldung: **23.05.2007**
(21) Anmeldenummer: 05405653.6
(22) Anmeldetag: 22.11.2005
(51) Int. Cl.: B32B 9/02, B32B 7/12, B32B 37/00

(54) **Verbundplatte**

(71) Anmelder: Alcan Technology & Management Ltd., 8212 Neuhausen am Rheinfall (CH)
(72) Erfinder: Esseiva, Marcel, 8224 Löhningen (CH)

(57) **Zusammenfassung**

Die Erfindung betrifft eine Verbundplatte aus einer Kernschicht und mindestens einer mit der Kernschicht über eine Klebstoffverbindung verbundenen Deckschicht. Die Verbundplatte zeichnet sich dadurch aus, die Kernschicht Kork enthält oder daraus besteht.

## Beschreibung

Die Erfindung betrifft eine Verbundplatte mit einer Kernschicht und mindestens einer mit der Kernschicht über eine Klebstoffverbindung verbundenen Deckschicht sowie ein Verfahren zur Herstellung der Verbundplatte.

Es ist bekannt, Verbundplatten mit einer Kernschicht aus einem Kunststoff sowie Deckschichten aus Aluminiumblechen herzustellen. Diese Verbundplatten finden beispielsweise Verwendung in der Architektur, im Display- und Transportwesen.

Für gewisse Anwendungen werden hohe Anforderungen an die Feuerfestigkeit der Verbundplatten gestellt. Diese Anforderungen werden jedoch von vielen an sich geeigneten Kernschichtmaterialien aus z. B. Kunststoff nicht erfüllt. Geeignete Kernschichtmaterialien aus Kunststoff zu entwickeln, mit welchen die Verbundplatten die strengen Brandvorschriften erfüllen, ist jedoch sehr aufwändig und häufig resultieren daraus teure Lösungen.

Ferner werden in Bezug auf den Herstellungsprozess und die verwendeten Ausgangsmaterialien immer höhere Umweltanforderungen gestellt. So sollten die Rohmaterialien aus umweltfreundlicher Produktion stammen und z. B. recyclierbar sein. Überdies soll die Verarbeitung der Ausgangsmaterialien zu Verbundplatten möglichst nicht gesundheitsgefährdend sein.

Aufgabe vorliegender Erfindung ist es daher, eine möglichst feuerfeste Verbundplatte vorzuschlagen, welche sich durch eine hohe Umweltverträglichkeit und kostengünstige Herstellung auszeichnet.

Die Aufgabe wird dadurch gelöst, dass die Kernschicht ein Korkmaterial enthält oder daraus besteht. Der Kork ist bevorzugt ein Naturkork. Dieser wird aus der sogenannten Korkeiche (Quercus suber L., Fagaceae), welche unter anderem in Frankreich, Spanien, Italien und Portugal angebaut wird, gewonnen.

Das Korkmaterial liegt zweckmässig als flächenförmiges bzw. plattenförmiges Material vor. Die Kernschicht besteht besonders bevorzugt aus Presskork. Der Presskork ist ein aus granuliertem Kork mittels Bindemittel zu einem Verbund gepresstes Material, welches als flächenförmiges, insbesondere als plattenförmiges, Gebilde vorliegt. Da sich das Korkgranulat aus billigem Abfall- oder Ausschusskork, und insbesondere aus dem wenig begehrten männlichen Kork herstellen lässt, ist Presskork ein sehr kostengünstiges Kernmaterial. Der Presskork kann eine Dicke von z. B. 1 bis 20 mm, vorzugsweise von 2 bis 15 mm aufweisen. Da Presskork flexible und insbesondere bei geringen Plattendicken schadlos biegsam ist, kann dieser bei kleineren Schichtdicken in Rollenform vorliegen. In der Regel liegt Presskork mit einer Dicke von 1 bis 6 mm in Rollenform vor, während Presskork mit einer Dicke von 6 mm oder mehr in der Regel in Form von Platten vorliegt. Das Presskorkmaterial wird beispielsweise in Breiten von 1000 mm hergestellt.

Es ist jedoch auch denkbar, dass das flächenförmige Korkmaterial aus einzelnen, flächigen Korkelementen von oben genannter Dicke besteht, welche ein- oder mehrschichtig sowie parkettartig zu einem flächenförmigen Gebilde gefügt bzw. verklebt sind.

Die Kernschicht, insbesondere wenn es sich um Presskork handelt, kann gegebenenfalls neben Kork und Bindemittel weitere Materialien beinhalten. So ist es z.B. möglich, Presskork zusätzlich mit granulatförmigen Kunststoffteilchen, wie z.B. Gummi, in unterschiedlichen Anteilen zu versehen. Ferner kann die Kernschicht auch flammhemmende Stoffe enthalten.

Die Kernschicht besteht jedoch in bevorzugter Ausführung neben dem die Korkteile bzw. Korkelemente zusammenhaltenden Bindemittel vollständig aus Korkmaterial.

Die Verbundplatte besteht bevorzugt aus einer Kernschicht der vorgenannten Art und beidseitig davon angeordneten und über jeweils eine Klebverbindung mit der Kernschicht verbundenen Deckschichten.

Wenigstens eine, vorzugsweise beide Deckschichten bestehen aus Aluminium- oder einer Aluminiumlegierung. Die besagten Deckschichten können Dicken von 0.1 bis 3 mm und vorzugsweise von 0.2 bis 1 mm aufweisen. Besteht die Verbundplatte beidseitig aus einer Deckschicht aus Aluminium oder einer Aluminiumlegierung, so können die Deckschichten gleiche oder unterschiedliche Schichtdicken aufweisen. Die Deckschichten ihrerseits können beispielsweise lackiert oder andersweitig oberflächenmodifiziert sein.

Die Klebverbindung zwischen Deckplatte und Kernschicht besteht bevorzugt aus einem polymeren Klebstoff. Der Klebstoff kann ein chemisch reagierender oder physikalisch abbindender Klebstoff sein. Diese können z. B. sein, Reaktionsklebstoffe, Schmelzklebstoffe oder Lösungsmittelklebstoffe. Der Klebstoff kann ein handelsübliches Produkt auf der Basis von Polyolefinen, z.B. Polyethylen oder Polypropylen, sein. Bevorzugte Klebstoffe können z.B. auf Ethylen-Vinylacetat basieren. Ein besonders bevorzugter Klebstoff wird unter dem Markennamen Lucalen ® vertrieben.

Die Klebverbindung kann durch Auftrag eines flüssigen Ein- oder Mehrkomponenten Klebstoffes auf eine oder beide Fügepartner und anschliessendes Verbundpressen, gegebenenfalls durch Heisspressen unter Wärme- und Druckeinwirkung, hergestellt werden. Während des Pressvorgangs härtet der Klebstoff chemisch - oder bindet physikalisch ab, so dass ein fester Verbund zwischen Deckschicht und Kernschicht entsteht. Die in flüssiger Form vorliegenden Klebstoffkomponenten können z. B. aufgesprüht oder aufgerakelt werden.

Alternativ dazu kann zwischen den Fügepartnern eine polymere Klebstofffolie eingebracht werde, welche beim anschliessenden Verbundpressen aufgeschmolzen wird, wobei sich der Klebstoff mit der Dechschicht und der Kernschicht verbindet. Das Verbundpressen kann auch hier ein Heisspressen unter Wärme- und Druckeinwirkung sein.

Der Klebstoff kann während des Herstellungsprozess zwischen die Fügepartner bzw. auf einen der oder beide Fügepartner aufgebracht werden. Ferner kann die Deckschicht und/oder Kernschicht den Klebstoff in Form einer vorgängig auf diese aufgebrachten Beschichtung in den Herstellungsprozess einbringen. Die Kernschicht und/oder Deckschicht kann auch hier entweder mit Flüssigklebstoff oder mit einer Klebstofffolie beschichtet werden.

Die Klebstoffschicht kann auch auf einen der beiden Fügepartner flächig aufextrudiert werden, wobei die Fügepartner durch anschliessendes Verbundpressen, gegebenenfalls mittels Heisspressen unter Wärme- und/oder Druckeinwirkung, miteinander verbunden werden.

Die Klebstoffschicht, welche vorzugsweise flächendeckend appliziert wird, kann z.B. eine Dicke von 2 bis 500 µm, vorzugsweise von 50 bis 200 µm aufweisen.

Die Gesamtverbunddicke kann z.B. 3 bis 30 mm betragen.

Ein bevorzugtes Verfahren zur Herstellung einer erfindungsgemässen Verbundplatte zeichnet sich durch folgende Schritte aus:
a) Bereitstellen von wenigstens einem und vorzugsweise zweier Deckschichtmaterial(ien) und einem Kernschichtschichtmaterial in Form von flächen- bzw. plattenförmigem Material in Rollenform;
b) Kontinuierliches Zuführen in die Kaschieranlage von Deckschichtmaterial und Kernschichtmaterial ab Rolle;
c) Verpressen der Schichtmaterialien zu einem Schichtverbund durch ausüben von Hitze und/oder Druck, wobei die Schichtmaterialien zwischen Kaschierwalzen durchgeführt werden, über welche eine Pressdruck auf den Schichtverbund ausgeübt wird.

Die Schichtmaterialien werden bevorzugt kontinuierlich von Rollen abgewickelt, wobei gegebenenfalls noch ein Klebstoff zugeführt wird, sofern dieser nicht schon vorgängig auf wenigstens eines der Schichtmaterialien aufgetragen wurde, und dem Walzenspalt der Kaschierwalzen zu- und hindurchgeführt, wobei durch die Kaschierwalzen ein Kaschierdruck auf den Schichtverbund ausgeübt wird und sich der Klebstoff gegebenenfalls unter zusätzlicher Wärmeeinwirkung mit den Schichtmaterialien verbindet. Die Kaschierwalzen können dazu beheizt sein.

Bevorzugt werden der Kaschieranlage von Rollen zwei Deckschichtlagen und zwischen den Deckschichtlagen, sandwichartig angeordnet und ebenfalls ab Rolle, die Kernschichtlage zugeführt.

Wie bereits oben erwähnt, kann der Klebstoff im Kaschierwerk zwischen Deckschicht und Kernschicht eingebracht bzw. auf ein oder beide der gegenseitig zu fügenden Schichtmaterialien aufgebracht werden. Der Klebstoff kann jedoch auch bereits auf einem oder beiden der gegenseitig zu fügenden und in Rollenform vorliegenden Schichtmaterialien aufgebracht sein.

In bevorzugter Ausführung wird der Klebstoff in Form einer Klebstofffolie kontinuierlich zwischen Deckschicht und Kernschicht im Kaschierwerk zugeführt. Die Klebstofffolie kann ebenfalls als Rollenmaterial vorliegen. Die Klebstoffschicht kann wie bereits erwähnt auch über einen Extruder im Kaschierwerk auf eines der oder beide der gegenseitig zu fügenden Schichtmaterialien aufextrudiert werden.

Das kontinuierlich aus dem Kaschierwerk geführte Verbundmaterial wird anschliessend zu einzelnen Plattenelementen einer gewünschten Länge abgelängt.

Die erfindungsgemässe Verbundplatte zeichnet sich durch eine hohe Feuerfestigkeit, ausgezeichnete Isolationseigenschaften und durch eine gute Umformbarkeit aus. Ferner lässt sich die Verbundplatte in einem kontinuierlichen Prozess herstellen. Die Verarbeitung von Kork ist im Gegensatz zu Kunststoffkernmaterialien gesundheitlich absolut unbedenklich, da dieser in jedem Verarbeitungsstadium keine giftigen Stoffe freisetzt. Im Gegensatz zu Kunststoffkernschichten herkömmlicher Verbundplatten ist der Kork ein erneuerbarer und recyclierbarer Rohstoff.

Die Kernschicht aus Kork hat wärmeisolierende, schalldämmende Eigenschaften und ist verrottungsbeständig, hydrophob sowie feuerresistent. Kork zeichnet sich überdies durch seine natürliche Elastizität und seine geringe Dichte von rund 200 bis 300 kg/m³ aus.

Die erfindungsgemässe Verbundplatte findet Verwendung in der Architektur, z. B. für Messestände, oder Verschalungen, im Display-Markt sowie im Akustik-, Hobby- und Transport-Markt. Der Transportmarkt umfasst unter anderem Schiffe, Boote, Flugzeuge, Strassenfahrzeuge, wie Lastkraftwagen oder Kastenwagen, sowie Schienenfahrzeuge. Die erfindungsgemässe Verbundplatte findet insbesondere in jenen Bereichen Anwendung, in welchen entsprechende Anforderungen an die Feuerfestigkeit sowie den Leichtbau gestellt werden. Dies betreffen unter anderem Anwendungen im Innenbereich, z.B. Trennwände oder Verschalungen bzw. Aufbauten in oder bei Gebäuden oder Transportmitteln, wie Automobile, Flugzeuge, Boote, Strassen- oder Schienenfahrzeuge.

Weitere Vorteile, Merkmale und Einzelheiten der Erfindung ergeben sich aus der nachfolgenden Beschreibung eines Ausführungsbeispiels anhand der Zeichnungen. Diese zeigen in:
- Fig. 1:: eine Ausführungsform einer erfindungsgemässen Verbundplatte;
- Fig. 2:: eine schematische Skizze eines Kaschierwerks geeignet zur Herstellung der erfindungsgemässen Verbundplatte.

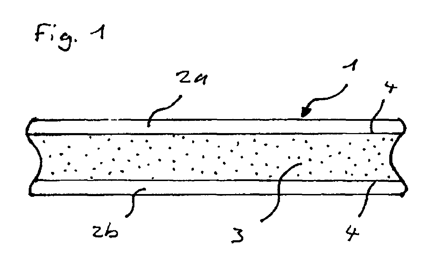

Die Verbundplatte 1 gemäss Fig. 1 enthält eine Kernschicht 3 aus Presskork sowie beidseitig davon angeordnete Deckschichten 2a, 2b aus einer Aluminiumlegierung, welche über Klebstoffschichten 4 mit der Kernschicht 3 verbunden sind.

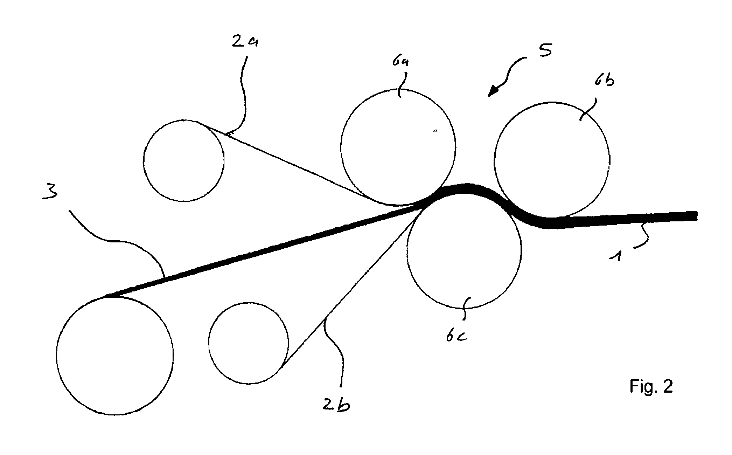

Zur Herstellung einer erfindungsgemässen Verbundplatte werden in einem kontinuierlichen Verfahren das Kernschichtmaterial 3 sowie die Deckschichtmaterialien 2a, 2b von Rollen abgewickelt und kontinuierlich einem Kaschierwerk 5 zugeführt (Fig. 2). Sofern nicht bereits auf die Schichtmaterialien aufgetragen, wird im Kaschierwerk zusätzlich noch ein Klebstoff zugeführt (nicht gezeigt). Die Schichtmaterialien werden durch den Walzenspalt von beheizten Kaschierwalzen 6a, 6b, 6c hindurchgeführt und mittels Wärme und Druckbeaufschlagung zu einem Verbundmaterial 1 zusammengeführt. Das Verbundmaterial kann gegebenenfalls durch nachfolgende Richtrollen gerichtet und anschliessend zu einzelnen Plattenelementen abgelängt werden (nicht gezeigt).

## Patentansprüche

1. Verbundplatte mit einer Kernschicht und mindestens einer mit der Kernschicht über eine Klebstoffverbindung verbundenen Deckschicht,
**dadurch gekennzeichnet, dass**
die Kernschicht Kork enthält oder daraus besteht.

2. Verbundplatte nach Anspruch 1, **dadurch gekennzeichnet, dass** die Kernschicht aus Presskork ist.

3. Verbundplatte nach einem der vorangehenden Ansprüche, **dadurch gekennzeichnet, dass** der Presskork ein aus granuliertem Kork mittels Bindemittel zu einem Verbund gepresstes, flächenförmiges, insbesondere plattenförmiges, Material ist.

4. Verbundplatte nach einem der vorangehenden Ansprüche, **dadurch gekennzeichnet, dass** die Verbundplatte aus einer Kernschicht und beidseitig davon angeordneten und über jeweils eine Klebstoffverbindung mit der Kernschicht verbundenen Deckschichten besteht.

5. Verbundplatte nach einem der vorangehenden Ansprüche, **dadurch gekennzeichnet, dass** wenigstens eine, vorzugsweise beide Deckschichten aus Aluminium- oder einer Aluminiumlegierung sind.

6. Verfahren zur Herstellung einer Verbundplatte nach einem der vorangehenden Ansprüche,
**gekennzeichnet durch** die folgenden Schritte:
a) Bereitstellen von wenigstens einem und vorzugsweise zweier Deckschichtmaterial(ien) und einem Kernschichtschichtmaterial in Form von flächen- bzw. plattenförmigem Material in Rollenform;
b) Kontinuierliches Zuführen der Kaschieranlage von Deckschichtmaterial und Kernschichtmaterial ab Rolle;
c) Verpressen der Schichtmaterialien zu einem Schichtverbund **durch** ausüben von Hitze und/oder Druck, wobei die Schichtmaterialien zwischen Kaschierwalzen durchgeführt werden, über welche eine Pressdruck auf den Schichtverbund ausgeübt wird.

7. Verfahren nach Anspruch 6, **dadurch gekennzeichnet, dass** im Kaschierwerk zwischen Deckschicht und Kernschicht vor dem Pressvorgang ein Klebstoff zugeführt wird.
